Europäisches Patentamt

European Patent Office

Office européen des brevets

(11) Veröffentlichungsnummer: **0 496 100 A1**

# EUROPÄISCHE PATENTANMELDUNG

(21) Anmeldenummer: **91122070.5**

(22) Anmeldetag: **21.12.91**

(51) Int. Cl.⁵: **G11B 5/85**, G11B 5/84

(30) Priorität: **21.01.91 DE 4101195**

(43) Veröffentlichungstag der Anmeldung:
**29.07.92 Patentblatt 92/31**

(84) Benannte Vertragsstaaten:
**DE FR GB NL**

(71) Anmelder: **BASF Magnetics GmbH
Dynamostrasse 3
W-6800 Mannheim 1(DE)**

(72) Erfinder: **Richter, Hans Juergen, Dr.
Einlaubstrasse 54
W-6731 St. Martin(DE)**
Erfinder: **Hibst, Hartmut, Dr.
Branichstrasse 23
W-6905 Schriesheim(DE)**
Erfinder: **Fischer, Gerd, Dr.
Faberstrasse 20
W-6700 Ludwigshafen(DE)**

(74) Vertreter: **Langfinger, Klaus-Dieter, Dr. et al
BASF AG Carl-Bosch-Strasse 38
W-6700 Ludwigshafen(DE)**

(54) Verfahren zur Herstellung eines magnetischen Aufzeichnungsträgers.

(57) Die Erfindung betrifft ein Verfahren zur Herstellung eines magnetischen Aufzeichnungsträgers, im wesentlichen bestehend aus einem polymeren, bahnförmigen Trägermaterial und einer kohärenten dünnen Schicht eines ferromagnetischen Materials, in einer Vakuumkammer durch Abscheiden eines Dampfstrahls des ferromagnetischen Materials auf der auf einem walzenförmigen Kühlkörper geführten, bewegten Fläche des Trägermaterials.

FIG.1

FIG.2

EP 0 496 100 A1

Die Erfindung betrifft ein Verfahren zur Herstellung eines magnetischen Aufzeichnungsträgers, im wesentlichen bestehend aus einem polymeren, bahnförmigen Trägermaterial und einer kohärenten dünnen Schicht eines ferromagnetischen Materials in einer Vakuumkammer durch Abscheiden eines Dampfstrahls des ferromagnetischen Materials auf der, über einen walzenförmigen Körper geführten, bewegten Fläche des Trägermaterials.

Magnetische Aufzeichnungsträger, deren magnetische Schicht aus einer kohärenten, ferromagnetischen Metalldünnschicht besteht, sind bekannt. Sie werden üblicherweise dadurch hergestellt, daß in einer Vakuumkammer das ferromagnetische Material in einer Verdampfereinheit verdampft und der resultierende Dampfstrahl auf der bewegten und über einen walzenförmigen Körper, üblicherweise einen Kühlkörper, geführten Fläche eines polymeren Trägermaterials abgeschieden wird. Zur Erzeugung einer magnetischen Vorzugsrichtung in der Magnetschicht wird der Dampfstrahl schräg zur Ebene des Trägermaterials geführt und abgeschieden. Die Einstellung eines Bedampfungswinkels läßt sich dadurch erreichen, daß durch Blenden Teile des Dampfstrahls abgedeckt werden, so daß nur noch die schräg zur Ebene des Trägermaterials gerichteten Anteile freigegeben sind. Außerdem läßt sich auch die Verdampferquelle derart anordnen, daß sie sich nicht in der senkrechten Projektion zur Führungsachse des Körpers sondern verschoben in Richtung auf die senkrechte Projektion der Mantellinie des walzenförmigen Körpers befindet.

Entsprechend gefertigte Aufzeichnungsträger eignen sich in besonderer Weise zur Aufzeichnung von Informationen mit hoher Speicherdichte, wie sie beispielsweise bei den hohen Frequenzen moderner Videoaufzeichnungsverfahren auftreten. Bei solchen Videoanwendungen, die nach dem Helican-Scan-Prinzip arbeiten, bewegt sich der Magnetkopf in einem Winkel von im allgemeinen 3 bis 10° relativ zur Bandlängsrichtung. Je nach Aufzeichnungssystem ist zudem der Luftspalt des Magnetkopfs noch zusätzlich um einen Winkel, der beispielsweise bei dem sogenannten Hi8-System 10° betragen kann, gegen die Aufzeichnungsrichtung geneigt. Gegenüber der Bandlaufrichtung und damit gegenüber der magnetischen Vorzugsrichtung ergibt sich somit eine Neigung der magnetischen Aufzeichungsspuren, welche beispielsweise etwa 15° betragen kann. Diese Abweichung von der magnetischen Vorzugsrichtung des magnetischen Aufzeichnungsträgers bedeutet eine Einbuße an für die Wiedergabe verfügbarer remanenter Magnetisierung.

Aufgabe der vorliegenden Erfindung war es daher, ein verfahren zur Herstellung von magnetischen Aufzeichnungsträger vom Metalldünnschichttyp bereitzustellen, das den aufgezeigten Nachteil nicht aufweist und insbesondere war es Aufgabe der Erfindung, einen magnetischen Aufzeichnungsträger vom Metalldünnschichttyp zu erhalten, bei dem die Projektion der magnetischen Vorzugsrichtung in die Bandebene mit der mittleren Aufzeichnungsrichtung übereinstimmt.

Es wurde nun gefunden, daß sich mit einem Verfahren zur Herstellung von magnetischen Aufzeichnungsträgern, im wesentlichen bestehend aus einem polymeren Trägermaterial und einer kohärenten dünnen Schicht eines ferromagnetischen Materials, in einer Vakuumkammer durch Erzeugen eines Dampfstrahls des ferromagnetischen Materials aus einer damit versehenen Verdampfereinheit und Abscheiden des Dampfstrahls auf dem, über einen walzenförmigen Körper, insbesondere über einen Kühlkörper geführten Trägermaterial, wobei der Dampfstrahl unter einem von 90° abweichenden Winkel auf das Trägermaterial auftrifft, die Aufgabe lösen läßt, wenn die Mitte der Verdampfereinheit in Achsrichtung des Körpers gegenüber der Mitte der zu bedampfenden Fläche des Trägermaterials lateral verschoben ist.

Die für die Ausbildung der dünnen ferromagnetischen Schichten geeigneten Materialien sind bekannt. Es sind dies die als dünne Schichten aufgebrachten Metalle Co, Ni, Fe sowie deren Legierungen und auch solche dünne Schichten, welche noch ein oder mehr weitere Elemente, wenn auch in geringen Mengen, enthalten, wie z.B. Chrom. Zu einer Verbesserung der chemischen und mechanischen Eigenschaften dieser Schichten trägt insbesondere auch die Anwesenheit von Sauerstoff bei, vor allem wenn Sauerstoff während des Bedampfungsvorgangs zugeführt wird.

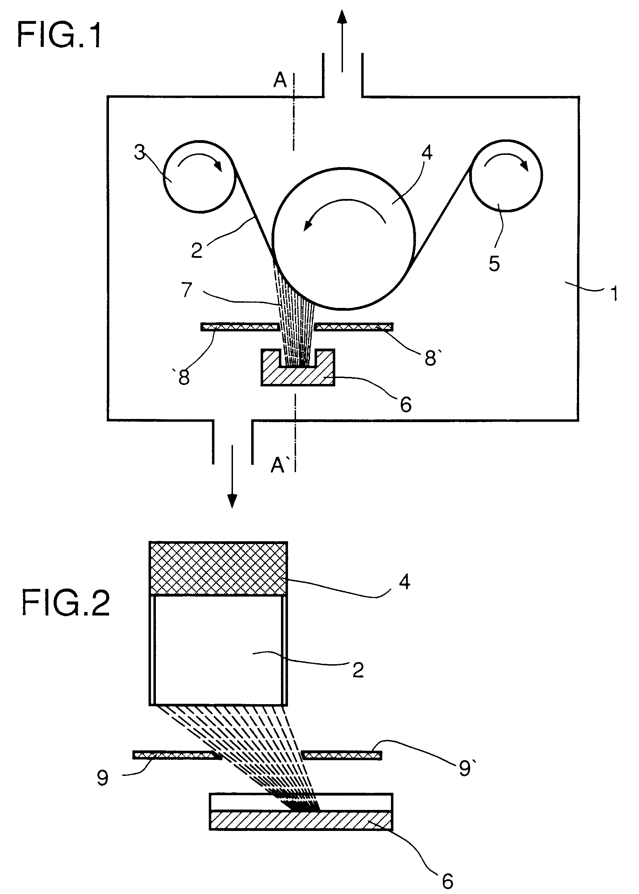

Die Durchführung des erfindungsgemäßen Verfahrens sei beispielhaft an den Figuren 1 und 2 erläutert. Dabei zeigt die

Figur 1     das Schema einer Bedampfungseinrichtung,

Figur 2     die Seitenansicht der Bedampfungseinrichtung gemäß Figur 1 entsprechend dem Schnitt A-A'.

Figur 1 zeigt eine an sich bekannte Bedampfungseinrichtung, bestehend aus der Vakuumkammer 1, in der das polymere Trägermaterial 2 als Folienbahn von der Vorratsrolle 3 über den walzenförmigen Kühlkörper 4 zur Aufwickelrolle 5 geführt wird. Unterhalb des Kühlkörpers 4, seitlich in Richtung der senkrechten Projektion der Mantellinie des Kühlkörpers, befindet sich die Verdampfereinheit 6 mit dem ferromagnetischen Material, dessen Dampfstrahl 7, bedingt durch die Blenden 8 und 8', in einem von 90° verschiedenen Winkel auf die Folienbahn auftrifft und dort kondensiert. Gemäß dem erfindungsgemäßen Verfahren ist die verdampfereinheit 6 in Achsrichtung des Kühlkörpers gegenüber der Mitte der zu bedampfenden Folienbahn 2 seitlich verschoben, wie in Figur 2, einen Schnitt entlang der Linie A-A' der Figur 1, gezeigt. Im Rahmen der Erfindung hat es sich außerdem als zweckmäßig herausgestellt, den Dampfstrahl 7 noch zusätzlich durch die Blenden 9 und 9' zu orientieren. Die Verschiebung der Verdampfereinheit und die Ausblendung des Dampfstrahls - wie in Figur 2 bildmäßig dargestellt - wird so gewählt, daß der mittlere Auftreffwinkel mit dem für das magnetische Aufzeichnungsmaterial vorgesehenen mittleren Aufzeichnungswinkel nahezu übereinstimmt.

Mit Hilfe des erfindungsgemäßen Verfahrens wird die Herstellung von magnetischen Aufzeichnungsträgern, insbesondere solche für die Videoaufzeichnung nach dem Helican-Scan-Prinzip, möglich, deren Projektion der magnetische Vorzugsrichtung in die Bandebene mit der mittleren Aufzeichnungsrichtung übereinstimmt.

**Patentansprüche**

1. Verfahren zur Herstellung von magnetischen Aufzeichnungsträgern, im wesentlichen bestehend aus einem polymeren Trägermaterial und einer kohärenten dünnen Schicht eines ferro-magnetischen Materials, in einer Vakuumkam-mer durch Erzeugen eines Dampfstrahls des ferromagnetischen Materials aus einer damit versehenen Verdampfereinheit und Abscheiden des Dampfstrahls auf dem, über einen walzen-förmigen Körper geführten Trägermaterial, wo-bei der Dampfstrahl unter einem von 90° abweichenden Winkel auf das Trägermaterial auftrifft, dadurch gekennzeichnet, daß die Mitte der Verdampfereinheit in Achsrichtung des Körpers gegenüber der Mitte der zu bedampfenden Fläche des Trägermaterials lateral ver-schoben ist.

FIG.1

FIG.2

Europäisches
Patentamt

**EUROPÄISCHER RECHERCHENBERICHT**

Nummer der Anmeldung

| | **EINSCHLÄGIGE DOKUMENTE** | | EP 91122070.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| X | <u>JP - A - 02-14 424</u> (SONY CORP.)    * Fig. 1,4 * | 1 | G 11 B 5/85 G 11 B 5/84 |
| A | PATENT ABSTRACTS OF JAPAN, unexamined applications, P Field, Band 10, Nr. 344, 20. November 1986 THE PATENT OFFICE JAPANESE GOVERNMENT Seite 112 P 518    * Kokai-Nr. 61-145 730      (HITACHI MAXELL LTD) * | 1 | |
| A | <u>EP - A - 0 387 619</u> (HITACHI MAXELL LTD)    * Fig. 1; Zusammenfassung * | 1 | |
| | | | RECHERCHIERTE SACHGEBIETE (Int. Cl⁵) |
| | | | G 11 B   5/00 C 23 C 14/00 |

Der vorliegende Recherchenbericht wurde für alle Patentansprüche erstellt.

| Recherchenort | Abschlußdatum der Recherche | Prüfer |
|---|---|---|
| WIEN | 24-04-1992 | BERGER |